# EUROPÄISCHE PATENTSCHRIFT

(11) **EP 0 579 015 B1**
(45) Veröffentlichungstag und Bekanntmachung des Hinweises auf die Patenterteilung: **13.03.1996**
(21) Anmeldenummer: 93110177.8
(22) Anmeldetag: 25.06.1993
(51) Int. Cl.: H02P 6/12, H02P 3/08, H02P 5/418, G01P 3/481

(54) **Schaltanordnung zur Erzeugung einer drehzahlproportionalen Impulsfolge**
Switching device for the generation of a speed-proportional pulse train
Dispositif de commutation pour la génération d'un train d'impulsions proportionnel à la vitesse

(30) Priorität: 11.07.1992 DE 4222914
(43) Veröffentlichungstag der Anmeldung: 19.01.1994
(73) Patentinhaber: Bayerische Motoren Werke Aktiengesellschaft, D-80788 München (DE)
(72) Erfinder: Griessbach, Robert, D-8011 Höhenkirchen (DE)

(56) Entgegenhaltungen:
- DD-A- 254 254
- DE-A- 3 226 073

## Beschreibung

Die Erfindung bezieht sich auf eine Schaltanordnung nach dem Oberbegriff des Patentanspruchs 1.

Eine derartige Schaltanordnung ist aus der DD 254 254 A1 bekannt. Dabei soll mit Hilfe eines spannungsgesteuerten Filters ein ständig optimal drehzahlproportionales Signal gewährleistet sein. Hierzu ist die Ausgangsspannung eines Integrators auf die jeweilige Motordrehzahl abgeglichen. Die Steuerung des Integrators übernimmt eine logische Schaltung, die die Ausgangssignale des spannungsgesteuerten Filters auswertet. Dabei soll mit Hilfe verschiedener elektronischer Komponenten, wie einem Siebglied, Komparatoren, einem spannungsgesteuerten Bandsperrfilter sowie einem Differenzverstärker, ein Filterabgleich durch eine Rückkopplung der Filtersteuerung mit dem Integrator erreicht werden.

Unübersehbar ist zunächst der große schaltungstechnische Aufwand für diese Schaltanordnung. Hinzu kommt ein funktionelles Problem. Bei raschen Änderungen des eingangsseitig über einen Strom-Spannungs-Wandler geführten und vom ausgewerteten Motorausgangssignal abgeleiteten Spannungssignal ist bedingt durch die vorgesehene Rückkoppelung eine an die jeweilige Drehzahl angepaßte Steuerung des Integrators nicht zuverlässig möglich. Die Notwendigkeit, die Mittenfrequenz des Anpassers auf die aktuelle Frequenz der Impulsfolge zu synchronisieren birgt die Gefahr in sich, daß die Synchronisation auf eine Störfrequenz erfolgt, zumal durch den ständig wirksamen Differenzverstärker höherfrequente Störungen gegenüber dem Nutzsignal ständig verstärkt werden.

Der Erfindung liegt die Aufgabe zugrunde, eine Schaltungsanordnung der eingangs genannten Art zu schaffen, die sich durch einen geringen schaltungstechnischen Aufwand auszeichnet und die auch bei starken Änderungen des Motorausgangssignals, wie sie insbesondere beim Abremsen des Gleichstromkommutatormotors auftreten, eine exakte Aussage über die Drehlage des Motors liefert.

Die Erfindung löst diese Aufgabe durch die kennzeichnenden Merkmale des Patentanspruchs 1.

Das Wesen der Erfindung besteht darin, daß die untere Grenzfrequenz des frequenzselektiven Filters variabel ist. Sie ist zunächst deutlich unter der Frequenz der gelieferten und aus dem Motorausgangssignal in bekannter Weise bestimmten Impulsfolge. Bei einer Änderung der Drehzahl hingegen wird diese Grenzfrequenz in den Bereich der Frequenz der Impulsfolge verschoben. Damit kommt der differenzierende Anteil des Bandpasses, der sich durch einen positiven Anstieg in einen Spannungs-Frequenz-Diagramm zeigt, zum Tragen. Durch das dann wirksame differenzierende Verhalten des frequenzselektiven Filters wird die Frequenzänderungen des Motorausgangssignals bevorzugt berücksichtigt. Liegen anschließend wiederum drehzahlkonstante Verhältnisse vor, so wird die untere Grenzfrequenz wiederum in dem Bereich eingestellt, in dem sie ursprünglich lag. Damit wird bei annähernd konstanter Drehzahl des Motors wiederum direkt der Signalverlauf des Motorausgangsignals ausgewertet.

Da Gleichstromkommutatormotoren Drehzahl schwankungen aufweisen, die auf unterschiedliche Ursachen zurückzuführen sind, sollen im Rahmen einer vorteilhaften Ausgestaltung der Erfindung nur die Drehzahländerungen berücksichtigt sein, die ein vorgegebenes Maß übersteigen. Damit werden beispielsweise Drehzahländerungen, die auf Schwankungen der Versorgungsspannung zurückzuführen sind, in der Regel nicht berücksichtigt. Hingegen werden Drehzahländerungen, wie sie typischerweise beim Ein- und insbesondere beim Ausschalten des Kommutatormotors auftreten, aufgrund ihres starken Änderungsverhaltens dann berücksichtigt und können in der erfindungsgemäßen Weise ausgewertet werden.

Das Ausmaß der Änderung der Impulsfolge kann auf besonders vorteilhafte Weise mit Hilfe des Amplitudenwertes des ausgewerteten Motorausgangssignals bestimmt werden. Dadurch werden Einflüsse durch gegebenenfalls zusätzlich vorhandene Bauelemente zur Signalauswertung ausgeschlossen.

Da insbesondere bei großen Änderungen der Impulsfolgefrequenz die durch die Rückwirkung des Kommutatormotors bedingten Signaländerungen nicht ohne weiteres erkennbar sind, kann für den Zeitraum, in dem diese Änderung auftritt, ein Hochpaß zweiter Ordnung wirksam sein. Damit werden Krümmungsänderungen, die im Motorausgangssignal aufgrund der Rückwirkung des Kommutatormotors auftreten, erkannt und auf eine Änderung der Drehlage des Kommutatormotors zurückgeführt. Damit wird es gerade in dem eingangs angesprochenen besonders kritischen Fall einer starken Drehzahländerung des Kommutatormotors möglich, die Drehlage bzw. deren Änderungen richtig zu erfassen.

Während sich die bisherigen Überlegungen in erster Linie mit dem Zeitraum beschäftigen, an dem und während dessen eine nennenswerte Änderung der Drehzahl des Kommutatormotors auftritt, soll sich nun eine Weiterbildung der Erfindung mit der Zeit nach der Beendigung der Drehzahländerung beschäftigen. Es handelt sich beispielsweise um den Zeitpunkt, zu dem der Kommutatormotor stillsteht bzw. seine Nenndrehzahl erreicht hat. Hierfür wird die Änderung der unteren Grenzfrequenz mit einer Zeitkonstante reversierbar gestaltet, die größer als und angepaßt an die Dauer der Drehzahländerung des Kommutatormotors ist. Damit steht im Anschluß an diese Zeit das frequenzselektive Filter wieder in der Weise zur Verfügung, wie sie für den gleichförmigen Betrieb des Kommutatormotors angepaßt ist. Die Änderungen des Kommutatorausgangssignals werden wieder nicht differenziert ausgewertet. Das differenzierende Verhalten des frequenzselektiven Filters wird somit im wesentlichen auf den Zeitraum der Drehzahländerungen begrenzt.

Die beschriebene Änderung der unteren Grenzfrequenz des frequenzselektiven Filters kann mit einer entsprechenden Vergrößerung der oberen Grenzfrequenz verbunden sein. Damit aber besteht die Gefahr, daß hochfrequente Störungen, die beispielsweise durch äußere Einflüsse bedingt sind, als vermeintliche Drehlageänderungen ausgewertet werden. Demgegenüber ergibt sich eine deutliche Verbesserung durch die Maßnahme, die obere Grenzfrequenz des frequenzselektiven Filters stets konstant zu lassen. Das frequenzselektive Filter zeigt dann eine Breite, die mit der Drehzahl bzw. der Drehzahländerung des Kommutatormotors korrespondiert. Treten keine nennenswerten Drehzahländerungen auf, so besitzt das frequenzselektive Filter eine relativ große Breite, während bei großen Drehzahländerungen die Breite des Filters deutlich reduziert ist und in einem Spannungs-Frequenz-Diagramm eine dreieckförmige im wesentlichen durch eine ansteigende und abfallende Flanke geprägte Gestalt besitzt.

Die Erfindung ist anhand eines in der Zeichnung dargestellten Ausführungsbeispiels weiter erläutert. Es zeigt
- Figur 1: ein Auführungsbeispiel einer Schaltanordnung gemäß der Erfindung
- Figur 2: die graphische Darstellung der für die Schaltanordnung von Figur 1 charakteristischen Spannungsverläufe und
- Figur 3: ein Diagramm zur Erläuterung der prinzipiellen Wirkungsweise der Erfindung.

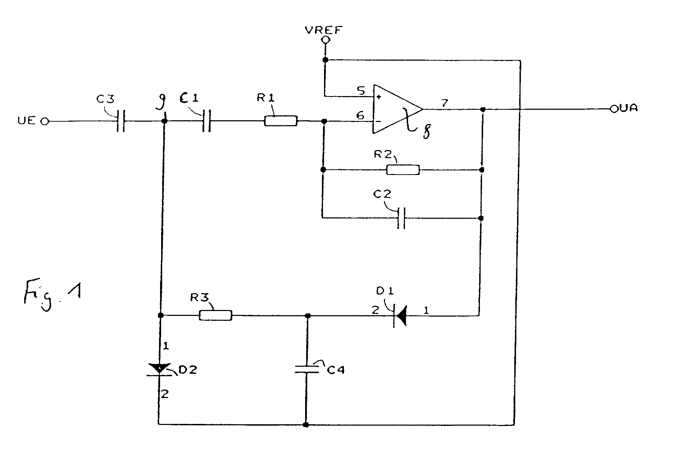

Die in Figur 1 dargestellte Schaltanordnung zeigt als frequenzselektiven Filter einen Bandpaß, bestehend aus einem Hochpaß und einem Tiefpaß, über den das Eingangssignal U_{E} über einen vorgeschalteten Eingangskondensator C₃ geführt ist. Beim Eingangssignal U_{E} handelt es sich um das Spannungssignal, das auf der potentialführenden Leitung (nicht dargestellt) eines ebenfalls nicht dargestellten Gleichstromkommutatormotors vorliegt. Der Eingangskondensator C₃ dient dazu, den Gleichstromanteil zu unterdrücken. Der Hochpaß seinerseits besteht aus einem Kondensator C₁ und einem nachgeschalteten Widerstand R₁, während der Tiefpaß aus einem Kondensator C₂ und einem dazu parallelen Widerstand R₂ besteht. Der Bandpaß ist in der dargestellten Weise am invertierenden Eingang 6 bzw. einem Ausgang 7 eines Operationsverstärkers 8 angeschlossen, dessen nichtinvertierender Eingang auf einer Bezugsspannung V_{Ref} liegt.

Zusätzlich ist ein Rückkopplungszweig vorgesehen, bestehend aus einer Diode D₁, einem RC-Glied mit einem Widerstand R₃ und einem Kondensator C₄ sowie einer Diode D₂, die in der dargestellten Weise am Ausgang 7 des Operationsverstärkers 8 sowie am Eingang 9 des Hochpasses (R₁, C₁) sowie an der Quelle der Bezugsspannung V_{Ref} angeschlossen sind.

Bei annähernd konstanter Drehzahl des Gleichstromkommutatormotors besitzt der Wechselstromanteil des Eingangssignals U_{E} einen um eine Mittellage schwankenden Verlauf. Die Signaländerungen gegenüber dieser Mittellage sind durch die Rückwirkungen des Gleichstromkommutatormotors bedingt und weisen eine Frequnz auf, die der Drehzahl des Motors proportional ist. Die Proportionalität wiederum hängt von der Anzahl der Kommutatorsegmente (nicht dargestellt) ab und ist gleich dieser Zahl.

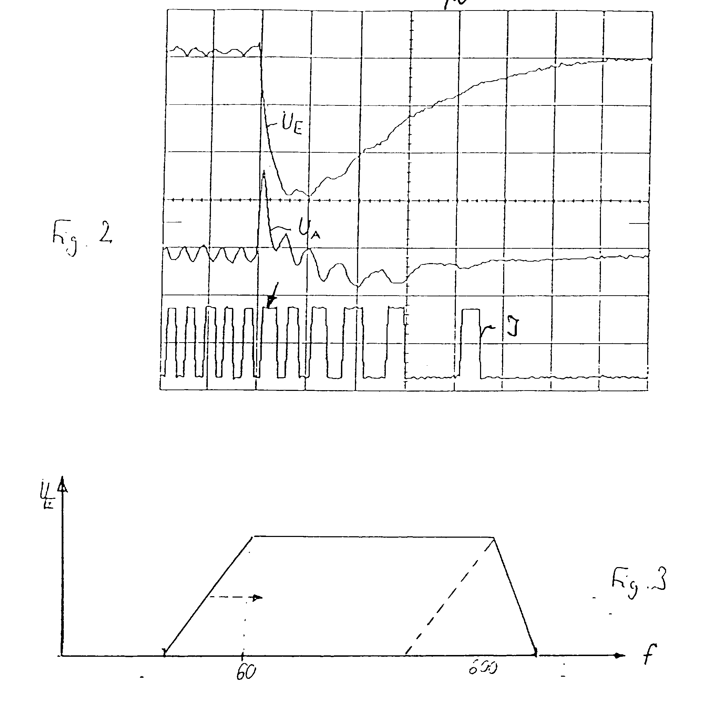

Die am Ausgang 7 des Operationsverstärkers 8 vorliegende Ausgangsspannung U_{A} schwankt ebenfalls mit dieser Frequenz um die Referenzspannung V_{Ref}. Dies ist für die beiden Spannungen U_{E} und U_{A} in Figur 2 in deren ersten beiden Sektoren dargestellt. Aus der Ausgangsspannung U_{A} wird in an sich bekannter Weise, wie beispielweise in der DE 40 17 779 A1 beschrieben, eine Impulsfolge I gewonnen, deren Frequenz den Schwankungen der beiden Spannungen entspricht und die in Figur 2 (unten) ebenfalls dargestellt ist.

Bei einer starken Drehzahländerung des Kommutatormotors, wie sie beispielsweise beim Abschalten durch Kurzschliessen seiner beiden Anschlüsse (nicht dargestellt) vorliegt, zeigt auch die Eingangsspannung U_{E} eine starke Änderung und besitzt den im dritten ff. Sektor dargestellten Verlauf. Der bis dahin unwirksame Rückkopplungszweig bestehend aus den Bauteilen D₁, D₂, R₃ und C₄, wird nunmehr wirksam. D₁ und D₂ werden leitend, und C₄ lädt sich auf eine Spannung auf, die sich aus der Differenz der Ausgangsspannung U_{A} und der Durchlaßspannung der Diode D₁ ergibt. Die Eingangsspannung am Eingang 9 wird dadurch angehoben, was zu einer Absenkung der Ausgangsspannung U_{A} führt. D₁ sperrt wieder. Die Ladung des Kondensators C₄ fließt über R₃ und D₂ ab. Die Zeitkonstante aus dem von R₃ und C₄ gebildeten RC-Glied ist dabei etwa gleich der Zeit, nach der der Wechselstromanteil des Eingangssignals U_{E} wieder den ursprünglichen Wert erreicht hat. Im Diagramm von Figur 2 ist diese Zeit etwa gleich der Länge von acht Sektoren.

Während dieser Zeit wird der zunächst aus dem Hochpaß R₁ und C₁ und dem Tiefpaß R₂ und C₂ gebildete Bandpaß aufgrund der Wirkung des dann aktiven Rückkopplungszweiges reversibel in seiner Breite verändert. Während er zunächst den durch ununterbrochene Linien dargestellten Verlauf besitzt, wird die untere Grenzfrequenz in den Bereich der dann vorliegenden Schwankungen des Wechselstromanteils des Eingangssignals U_{E} verlegt. Dieser Vorgang ist durch den in Figur 3 strichliert eingezeichneten Pfeil für die ansteigende Flanke des Bandpasses sowie den Verlauf dieser Flanke, ebenfalls strichliert eingezeichnet, nach vollständiger Verschiebung dargestellt. Der Bandpaß wirkt nunmehr, bedingt durch die ansteigende Flanke, differenzierend. Dies wirkt sich insbesondere für den abfallenden Signalverlauf des Eingangssignals U_{E} (im dritten Sektor) aus. Hinzu kommt die Wirkung eines Hochpasses zweiter Ordnung, die durch den differentiellen Widerstand von R₁ und C₁ einerseits und D₂ und C₃ andererseits gebildet ist und der die im Verlauf des Signals U_{E} enthaltenen Krümmungsänderungen erfaßt. Diese sind ebenfalls durch die Rückwirkung der Kommutatorsegmente des Gleichstrommotors bedingt.

Mit der nachgeschalteten Auswerteschaltung wird aus dem Ausgangssignal U_{A} insbesondere der durch einen Pfeil gekennzeichnete Impuls der Impulsfolge I detektiert. Dadurch wird es möglich, auch die Rückwirkung der Kommutatorsegmente bei starken Drehzahländerungen des Gleichstromkommutatormotors exakt zu analysieren und die Drehlage des Gleichstromkommutatormotors während und nach starken Drehzahländerungen zu bestimmen.

## Patentansprüche

1. Schaltanordnung zur Erzeugung einer drehzahlproportionalen Impulsfolge bei einem Gleichstromkommutatormotor mit einem frequenzselektiven Filter, dessen Grenzfrequenz auf die Motordrehzahl abgestimmt und entsprechend der Änderung dieser Drehzahl veränderbar ist,
dadurch gekennzeichnet, daß die untere Grenzfrequenz des frequenzselektiven Filters bei unveränderter Motordrehzahl deutlich unter und bei einer Änderung der Drehzahl jedoch etwa im Bereich der Frequenz der Impulsfolge liegt.

2. Schaltanordnung nach Anspruch 1,
dadurch gekennzeichnet, daß nur Änderungen der Impulsfolge berücksichtigt sind, die ein vorgegebenes Maß übersteigen.

3. Schaltanordnung nach Anspruch 2,
dadurch gekennzeichnet, daß die Änderungen der Impulsfolge durch den Amplitudenwert des ausgewerteten Motorausgangssignals bestimmt sind.

4. Schaltanordnung nach einem der Ansprüche 1 bis 3,
dadurch gekennzeichnet, daß bei Änderungen der Impulsfolge das Motorausgangssignal über einen Hochpaß zweiter Ordnung geführt ist.

5. Schaltanordnung nach einem der Ansprüche 1 bis 4,
dadurch gekennzeichnet, daß die Änderung der unteren Grenzfrequenz mit einer Zeitkonstante reversierbar ist, die größer als und angepaßt an die Änderungsdauer der Motordrehzahl ist.

6. Schaltanordnung nach einem der Ansprüche 1 bis 5,
dadurch gekennzeichnet, daß die obere Grenzfrequenz des frequenzselektiv Filter konstant ist.

## Claims

1. A circuit arrangement to create a pulse train proportional to rotational speed, with a direct current commutator motor with a frequency-selective filter having a cutoff frequency matched to the rotational speed of the motor and which can be changed correspondingly t a change in this rotational speed,
characterised in that the lower cutoff frequency of the frequency-selective filter lies markedly below the range of the frequency of the pulse train if the motor rotational speed is unchanged and approximately within the range of the frequency of the pulse train if the motor rotational speed changes.

2. A circuit arrangement according to claim 1,
characterised in that only those changes in the pulse train which exceed a pre-determined limit are taken into consideration.

3. A circuit arrangement according to claim 2,
characterised in that the changes in the pulse train are determined by the amplitude value of the evaluated motor output signal.

4. A circuit arrangement according to any one of claims 1 to 3,
characterised in that the motor output signal is routed via a second order high-pass filter in the event of changes in the pulse train.

5. A circuit arrangement according to any one of claims 1 to 4,
characterised in that the change in the lower cutoff frequency can be reversed with a time constant which is greater than, and matched to, the duration of change in the motor rotational speed.

6. A circuit arrangement according to any one of claims 1 to 5,
characterised in that the upper cutoff frequency of the frequency-selective filter is constant.

## Revendications

1. Circuit servant à produire un train d'impulsions proportionnel à une vitesse de rotation dans le cas d'un moteur à collecteur à courant continu avec un filtre sélectif en fréquence, dont la fréquence limite est accordée sur la vitesse de rotation du moteur et peut être modifiée d'une façon correspondant à la variation de cette vitesse de rotation, circuit caractérisé en ce que la fréquence inférieure limite du filtre sélectif en fréquence se trouve, quand la vitesse de rotation ne varie pas, nettement en dessous de la fréquence du train d'impulsions et en cas de variation de la vitesse de rotation se trouve toutefois à peu près dans la gamme de la fréquence du train d'impulsions.

2. Circuit selon la revendication 1, caractérisé en ce que l'on ne prend en considération que des variations du train d'impulsions, qui dépassent une mesure prédéfinie.

3. Circuit selon la revendication 2, caractérisé en ce que les variations du train d'impulsions sont déterminées par la valeur de l'amplitude du signal de sortie exploité du moteur.

4. Circuit selon l'une des revendications 1 à 3, caractérisé en ce que dans le cas de variations du train d'impulsions, on fait passer le signal de sortie du moteur sur un filtre passe-haut de second ordre.

5. Circuit selon l'une des revendications 1 à 4, caractérisé en ce que la variation de la fréquence inférieure limite est réversible avec une constante de temps, qui est plus grande que la durée de variation de la vitesse de rotation du moteur et est adaptée à cette durée.

6. Circuit selon l'une des revendications 1 à 5, caractérisé en ce que la fréquence limite du filtre sélectif en fréquence est constante.
